# FASCICULE DE BREVET EUROPEEN

(11) **EP 4 049 890 B1**
(45) Date de publication et mention de la délivrance du brevet: **08.04.2026**
(21) Numéro de dépôt: 22156754.8
(22) Date de dépôt: 15.02.2022
(51) Int. Cl.: B60N 2/015, B60N 2/75, B61D 33/00, B64D 11/06

(54) **SIÈGE À ACCOUDOIR(S) ET VÉHICULE DE TRANSPORT ASSOCIÉ**
SITZ MIT ARMLEHNE(N) UND ENTSPRECHENDES TRANSPORTFAHRZEUG
SEAT WITH ARMREST(S) AND ASSOCIATED TRANSPORT VEHICLE

(30) Priorité: 17.02.2021 FR 2101520
(43) Date de publication de la demande: 31.08.2022
(73) Titulaire: SpeedInnov, 75008 Paris (FR)
(72) Inventeur: PAILLER, Christophe, 17000 LA ROCHELLE (FR); BEAUSEIGNEUR, Christophe, 17540 FONTPATOUR DE VERINES (FR)
(74) Mandataire: Plasseraud IP

(56) Documents cités:
- EP-A1- 2 910 412
- CN-A- 108 819 809
- DE-U1- 29 915 349
- FR-A1- 2 928 624
- US-A1- 2014 300 147
- US-A1- 2016 311 349

## Description

La présente invention concerne un siège d'un véhicule de transport comprenant un dossier, une assise, un pied de siège fixé au plancher du véhicule, une coque recouvrant, au moins partiellement, l'arrière et les parties latérales du dossier du siège et recouvrant, au moins partiellement, la surface inférieure et les parties latérales de l'assise, et au moins un accoudoir latéral.

Un tel siège est destiné à recevoir un passager en position assise dans un véhicule de transport de passagers.

La présente invention concerne également un véhicule de transport associé, le véhicule de transport comprenant un tel siège. Un tel véhicule de transport de passagers correspond notamment à un véhicule ferroviaire, un bus, un tramway, un navire, un avion ou tout autre véhicule configuré pour transporter une pluralité de passagers.

Dans le domaine du transport de passagers, notamment ferroviaire, il est connu de ménager un compartiment d'accueil des passagers dans lequel des sièges pour passager sont alignés les uns derrière les autres, le plus souvent parallèlement à une direction de déplacement du véhicule. Le document EP 2910412 A1 divulgue un siège comprenant une coque et un accoudoir déplaçable .

Afin d'améliorer le confort des passagers de tels sièges sont généralement pourvus d'au moins un accoudoir latéral, notamment localisé côté couloir, afin de délimiter plus explicitement le volume d'assise de chaque passager vis-à-vis d'un passager adjacent.

Une telle solution ne donne cependant pas entière satisfaction. En effet, les solutions d'accoudoirs actuelles ne sont généralement pas adaptées pour des sièges prioritaires accessibles aux personnes à mobilité réduite, notamment pour le transport ferroviaire selon le règlement de l'Union Européenne n° 1300/2014 de la Commission du 18 novembre 2014 sur les spécifications techniques d'interopérabilité relatives à l'accessibilité du système ferroviaire de l'Union pour les personnes handicapées et les personnes à mobilité réduite, dit "STI PMR". Généralement les sièges prioritaires représentent au moins 10% d'une rame ferroviaire.

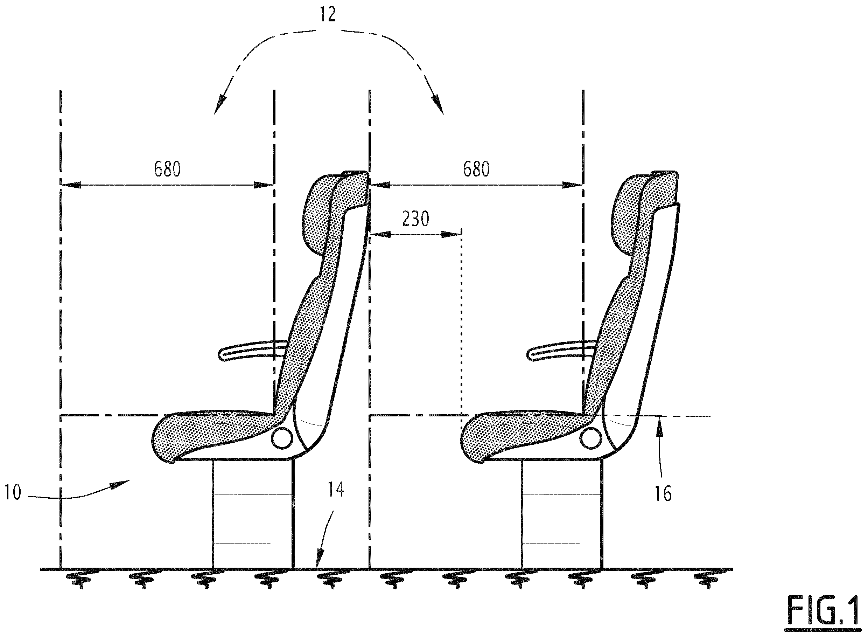

En particulier, tel qu'illustré par la figure 1 représentant schématiquement une vue de côté (i.e. latérale) de deux sièges 10 alignés l'un derrière l'autre selon la direction de déplacement du véhicule ferroviaire, selon ce règlement de l'Union Européenne, chaque siège 10 doit être espacé en respectant un volume 12 d'accessibilité, chaque siège étant fixé au sol 14 du véhicule ferroviaire et présentant un plan d'assise 16. Selon le volume d'accessibilité 12 défini par ce règlement, l'extrémité avant de l'assise d'un siège, autrement dit l'extrémité distale de l'assise par rapport au dossier du siège, doit être espacée d'au moins 230 mm du dossier du siège le précédant, tandis que l'extrémité proximale de l'assise par rapport au dossier du siège 10 doit être espacée d'au moins 680 mm du dossier du siège le précédant.

Les solutions d'accoudoirs actuelles ne permettent pas un tel accès sans entrave au siège 10, soit parce que l'accoudoir reste immobile, soit parce qu'en position permettant un accès au siège, l'espace d'accès ne respecte pas le volume d'accessibilité 12 précité conforme à la STI PMR. Par ailleurs, des solutions d'accoudoirs actuelles sont caractérisées par une position de l'accoudoir permettant un accès au siège où l'accoudoir est propre à heurter les jambes d'un passager installé derrière le siège associé à l'accoudoir considéré.

Un objectif de la présente invention est d'améliorer le confort du siège et la protection de l'espace privatif d'assise associé tout en étant conforme à la STI PMR et en évitant tout heurt de passager installé derrière le siège associé à l'accoudoir considéré.

A cet effet, l'invention a pour objet un siège d'un véhicule de transport comprenant un dossier, une assise, un pied de siège fixé au sol du véhicule, une coque recouvrant, au moins partiellement, l'arrière et les parties latérales du dossier du siège et recouvrant, au moins partiellement, la surface inférieure et les parties latérales de l'assise, et au moins un accoudoir latéral, l'accoudoir latéral étant relié par liaison mécanique à la coque du siège, la liaison mécanique à la coque du siège étant configurée pour rendre l'accoudoir latéral mobile, entre une première position basse d'effacement et d'accès latéral à l'assise dudit siège et une deuxième position haute d'appui-bras, la face appui-bras de l'accoudoir latéral présentant une extrémité distale, la hauteur de l'extrémité distale, par rapport au dossier, de la face appui-bras de l'accoudoir latéral étant, en première position basse de l'accoudoir latéral, inférieure à la hauteur de l'extrémité distale, par rapport au dossier, de la face appui-bras de l'accoudoir latéral en deuxième position haute d'appui-bras.

Le siège selon l'invention peut comprendre l'une ou plusieurs des caractéristiques suivantes, prise(s) isolément ou suivant toute combinaison techniquement possible :
- l'accoudoir latéral est relié par liaison pivot, ou par liaison glissière, à la coque du siège, l'accoudoir latéral étant mobile, entre une première position basse d'effacement et d'accès latéral à l'assise dudit siège et une deuxième position haute d'appui-bras, respectivement, selon un sens de rotation partant de l'assise vers le dossier en passant par l'avant du siège, ou selon une translation guidée par ladite liaison glissière ;
- en position basse d'effacement et d'accès latéral, l'accoudoir latéral prolonge latéralement le plan d'assise passager ou est complètement localisé sous ce plan d'assise passager.
- en position basse d'effacement et d'accès latéral, l'accoudoir latéral est sensiblement localisé à l'avant de la ligne d'aplomb de l'extrémité proximale de l'assise par rapport au dossier, tout en étant sensiblement localisé à l'arrière de la ligne d'aplomb de l'extrémité distale de l'assise par rapport au dossier du siège ;
- en position haute d'appui-bras, l'accoudoir latéral, d'une seule pièce, présente une hauteur, selon une direction sensiblement perpendiculaire au sol du véhicule, comprise entre 250 et 350 mm ;
- en position haute d'appui-bras, l'accoudoir latéral, d'une seule pièce, présente une longueur, selon une direction sensiblement parallèle à l'axe longitudinal de déplacement du véhicule, comprise entre 300 et 400 mm ;
- la valeur de l'angle de rotation pour passer de la première position basse d'effacement et d'accès latéral à l'assise dudit siège à la deuxième position haute d'appui-bras est au moins égale à 75°, de préférence sensiblement égale à 90°.
- la coque comprend un engrenage de blocage de l'accoudoir latéral en deuxième position haute d'appui-bras, dont le déblocage, est activé en présence d'une première rotation selon un angle prédéterminé de l'accoudoir latéral selon un premier sens de l'assise vers le dossier, suivie d'une deuxième rotation du dossier selon un deuxième sens inverse du dossier vers l'assise pour repasser à la première position basse d'effacement et d'accès latéral à l'assise en passant par l'avant du siège, la valeur de l'angle prédéterminé de la première rotation de déblocage d'engrenage étant de préférence comprise entre 15° et 25°.
- le pied de siège présente une forme configurée pour accueillir sans entrave l'accoudoir latéral en première position basse d'effacement et d'accès latéral à l'assise.

L'invention a également pour objet un véhicule de transport comprenant au moins un siège tel que décrit ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- **[****Fig 1****]** la figure 1 est une représentation schématique d'une vue de côté de deux sièges alignés l'un derrière l'autre et du volume d'accessibilité associé conformément à la STI PMR tel que décrit précédemment ;
- **[****Fig 2****]** la figure 2 est une représentation schématique d'une vue de côté d'un siège avec deux positions distinctes d'accoudoir et la cinématique de mouvement associée selon un premier mode de réalisation de la présente invention ;
- **[****Fig 3****]** la figure 3 est une représentation schématique d'une vue de face d'une partie basse du siège selon ce premier mode de réalisation de la présente invention ;
- **[****Fig 4****]** la figure 4 est une représentation schématique d'un deuxième mode de réalisation de la présente invention.

Dans la suite de la description, le terme « sensiblement » s'entend comme une relation d'égalité à plus ou moins 10%, c'est-à-dire avec une variation d'au plus 10%, de préférence encore comme une relation d'égalité à plus ou moins 5%, c'est-à-dire avec une variation d'au plus 5%.

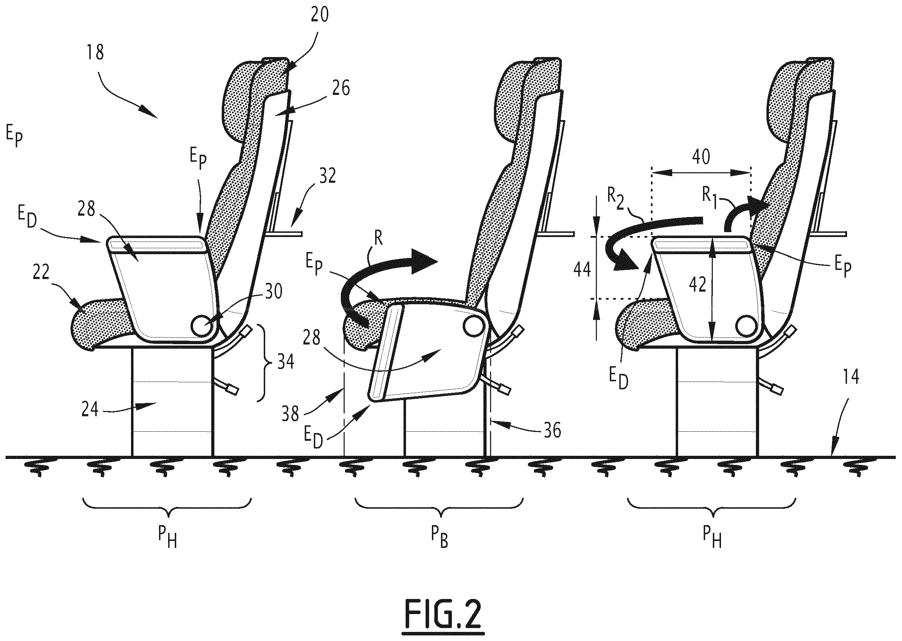

Un siège 18 de véhicule de transport selon la présente invention est illustré sur les figures 2 à 4. Un tel siège 18 est plus particulièrement destiné à équiper notamment un train à grande vitesse ou tout train grandes lignes.

Un tel siège 18 comprend classiquement un dossier 20, une assise 22 solidarisée à une extrémité supérieure d'un pied 24 du siège 18, l'autre extrémité inférieure du pied 24 étant fixée à la surface du sol 14 du véhicule de transport, une coque 26 recouvrant, au moins partiellement, l'arrière et les parties latérales du dossier 20 du siège 18 et recouvrant, au moins partiellement, la surface inférieure et les parties latérales de l'assise 22. Le siège 18 comprend en outre au moins un accoudoir 28 latéral.

Un tel accoudoir latéral 28 est notamment localisé côté couloir. Préférentiellement, selon un mode de réalisation non représenté, le siège 18 comprend deux accoudoirs 28 latéraux localisés de part et d'autre du siège 18.

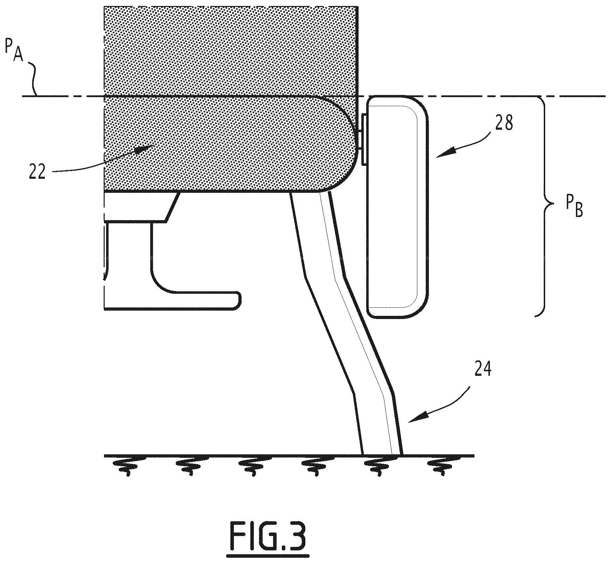

Avantageusement, selon un premier mode de réalisation de la présente invention illustré par les figures 2 et 3, l'accoudoir latéral 28 est relié à la coque 26 du siège 18 par une liaison mécanique, correspondant à une liaison pivot 30 selon ce premier mode de réalisation, l'accoudoir latéral 28 étant mobile, entre une première position basse P_{B} d'effacement et d'accès latéral à l'assise dudit siège 18 et une deuxième position haute P_{H} d'appui-bras avec une face appui-bras présentant par rapport au dossier 20 une extrémité proximale E_{P} et une extrémité distale E_{D}, selon un sens R de rotation partant de l'assise 22 vers le dossier 20 en passant par l'avant du siège 18.

Selon l'invention, en position basse P_{B} d'effacement et d'accès latéral, l'accoudoir latéral 28 prolonge latéralement le plan d'assise P_{A} passager ou est complètement localisé sous ce plan d'assise P_{A} passager,

De plus, la hauteur par rapport au sol 14, de l'extrémité distale E_{D}, par rapport au dossier 20, de la face appui-bras de l'accoudoir latéral 28 est, en première position basse P_{B} de l'accoudoir latéral 28, inférieure à la hauteur (i.e. par rapport au sol 14) de l'extrémité distale E_{D}, par rapport au dossier 20, de la face appui-bras de l'accoudoir latéral 28 en deuxième position haute P_{H} d'appui-bras.

Par position haute P_{H} d'appui-bras, on entend qu'en cette position, l'accoudoir latéral 28 est configuré pour que le passager y repose son bras aisément (i.e. sans difficulté), tandis que par position basse P_{B} d'effacement et d'accès latéral à l'assise dudit siège 18 on entend qu'en cette position escamotée, l'accoudoir latéral 18 est configuré pour s'effacer complètement par rapport au plan d'assise passager de sorte que le passager puisse accéder au siège sans aucune entrave conformément à la STI PMR.

Autrement dit, selon la présente invention le ou les accoudoirs 28 sont « effaçables » en position basse P_{B} selon une cinématique simple à manipuler, correspondant à une rotation vers le bas en passant par l'avant du siège, ce qui préserve l'accessibilité du passager au siège sans entrave, alors qu'en position haute P_{H} d'appui-bras obtenue selon une cinématique inverse correspondant à une rotation vers le haut en passant par l'avant du siège 18, l'accoudoir latéral 28 fournit un espace privatif au passager. L'accessibilité au siège comme son confort résultant sont donc améliorés par la présente invention.

Par ailleurs, selon le premier mode de réalisation de la présente invention, il est à noter que l'accoudoir latéral 28 est relié par liaison pivot 30 à la coque 26 du siège 18 et non à l'assise 22 ou au dossier 20, ce qui permet une indépendance de l'assise par rapport à l'accoudoir et permet notamment un remplacement de l'assise 22 sans nécessiter le démontage de l'accoudoir latéral 28, ou encore une indépendance entre la position de l'accoudoir latéral 28 et l'inclinaison du siège 18, celle-ci étant par exemple modifiable au moyen d'un mécanisme d'inclinaison activable au moyen d'un poignée, non représentée, fournie au sein de l'assise 22. Autrement dit, la modification de l'inclinaison du siège 18 n'a aucune incidence sur la position de l'accoudoir latéral 28.

Comme illustré par la figure 2, selon un aspect particulier optionnel, l'arrière de chaque siège 18 est également muni d'au moins une tablette 32 escamotable entre une position de rangement au sein d'un logement ménagé dans la face arrière du dossier 20 du siège 18 et une position déployée pour que le passager installé sur le siège à l'arrière du siège 18 considéré puisse déposer sur cette tablette divers objets, notamment un appareil électronique comprenant un écran, tel qu'une tablette électronique ou un smartphone.

De plus, selon un autre aspect particulier optionnel, l'arrière de chaque siège 18 est également muni d'un marchepied (i.e. repose pieds) 34 mobile entre une position haute de rangement et une position basse pour que le passager installé sur le siège à l'arrière du siège 18 considéré puisse déposer ses pieds.

Selon un aspect particulier de l'invention, en position basse P_{B} d'effacement et d'accès latéral au siège 18, l'accoudoir latéral 28 est sensiblement localisé à l'avant de la ligne d'aplomb 36 de l'extrémité proximale de l'assise 22 par rapport au dossier 20, tout en étant sensiblement localisé à l'arrière de la ligne d'aplomb 38 de l'extrémité distale de l'assise par rapport au dossier 20 du siège 18. Autrement dit, en position basse P_{B} d'effacement et d'accès latéral au siège 18, l'engagement de l'accoudoir latéral 28 dans le volume d'assise d'un passager arrière localisé sur un siège, non représenté, placé à l'arrière du siège 18 considéré, est modéré et limité par la ligne d'aplomb 36 de l'extrémité proximale de l'assise 22 par rapport au dossier 20.

Selon cet aspect, préférentiellement, en position basse P_{B} d'effacement et d'accès latéral au siège 18, l'ensemble de l'accoudoir latéral 28 est localisé sensiblement à l'avant de la face arrière du pied 24 du siège 18, afin d'éviter tout engagement de l'accoudoir latéral 28 dans l'espace d'assise du passager installé sur le siège à l'arrière du siège 18 considéré, et ainsi de heurter les jambes de ce passager lors de la manipulation de l'accoudoir latéral 28 pour le placer en position d'effacement P_{B} ou de réduire l'espace de rangement de bagage sous le siège 18 considéré.

Par ailleurs, en position haute P_{H} d'appui-bras, l'accoudoir latéral 28, d'une seule pièce, présente une longueur 40, selon une direction sensiblement parallèle à l'axe longitudinal de déplacement du véhicule, comprise entre 300 et 400 mm.

Avantageusement, en position haute P_{H} d'appui-bras, l'accoudoir latéral 28, d'une seule pièce, présente une hauteur 42, selon une direction sensiblement perpendiculaire au sol 14 du véhicule, comprise entre 250 et 350 mm. En d'autres termes, l'accoudoir latéral 28 présente une hauteur supérieure aux hauteurs d'accoudoirs classiques, et est alors dit « de grande hauteur ».

Une telle hauteur 42 de l'accoudoir 28 comprise entre 250 et 350 mm permet notamment d'isoler le passager du reste du véhicule de transport, notamment si le siège 18 est pourvu de deux accoudoirs disposés de part et d'autre. Un tel accoudoir 28 présentant une hauteur H comprise entre 250 et 350 mm permet en outre, côté couloir, de protéger le passager assis sur le siège 18, vis-à-vis des chocs (bagages, passager circulant au sein du couloir, etc.) et d'accroitre ainsi le confort perçu par le passager assis sur le siège 18.

Selon un autre aspect particulier de l'invention, la valeur de l'angle de rotation R pour passer de la première position basse P_{B} d'effacement et d'accès latéral à l'assise dudit siège 18 à la deuxième position haute P_{H} d'appui-bras est au moins égale à 75°. Par exemple, comme représenté sur la figure 2, la valeur de l'angle de rotation R pour passer de la première position basse P_{B} d'effacement et d'accès latéral à l'assise dudit siège 18 à la deuxième position haute P_{H} d'appui-bras est sensiblement égale à 90°, voire 180° selon une variante non représentée.

Selon un aspect complémentaire facultatif, la coque 26 comprend un engrenage, non représenté, de blocage de l'accoudoir latéral 28 en deuxième position haute P_{H} d'appui-bras, dont le déblocage, est activé en présence d'une première rotation R₁ selon un angle prédéterminé de l'accoudoir latéral 28, selon un premier sens de l'assise vers le dossier 20, suivie d'une deuxième rotation R₂ de l'accoudoir latéral 28 selon un deuxième sens inverse du premier sens, soit du dossier 20 vers l'assise 22, pour repasser à la première position basse P_{B} d'effacement et d'accès latéral à l'assise 22 en passant par l'avant du siège 18.

Autrement dit, deux actions distinctes du passager sont nécessaires pour passer de la position haute P_{H} d'appui-bras à la position basse P_{B} d'effacement et d'accès latéral à l'assise 22, ce qui permet d'éviter tout changement de position de l'accoudoir latéral 28 sans action volontaire d'un passager du véhicule de transport.

Plus précisément, selon une variante particulière de cet aspect complémentaire facultatif, la valeur de l'angle prédéterminé de la première rotation R₁ de déblocage d'engrenage est comprise entre 15° et 25°.

A titre d'alternative à la mise en oeuvre des deux rotations successives R₁ et R₂, pour empêcher un effacement fortuit de l'accoudoir, l'accoudoir latéral 28 comprend une palette, non représentée, de déblocage mécanique de la rotation de l'accoudoir latéral 28 selon le deuxième sens allant du dossier 20 vers l'assise 22, pour repasser à la première position basse P_{B} d'effacement et d'accès latéral à l'assise 22 en passant par l'avant du siège 18.

En relation avec la figure 3 représentant schématiquement une vue de face d'une partie basse du siège, selon le premier mode de réalisation de la présente invention, en position basse P_{B} d'effacement et d'accès latéral, l'accoudoir latéral 28 prolonge latéralement le plan d'assise P_{A} passager ou est sensiblement, voire complètement, localisé sous ce plan d'assise P_{A} passager.

En outre, selon un aspect complémentaire facultatif de ce premier mode de réalisation, le pied 24 de siège 18 présente une forme configurée pour accueillir sans entrave l'accoudoir latéral 28 en première position basse P_{B} d'effacement et d'accès latéral à l'assise 22. Autrement dit, selon ce premier mode de réalisation, le pied 24 est en retrait par rapport à l'accoudoir latéral 28 de façon à faciliter la rotation R de ce dernier (i.e. l'accoudoir latéral 28). Un tel retrait du pied 24 implique alors une réduction de la largeur disponible sous le siège 18 pour stocker les bagages.

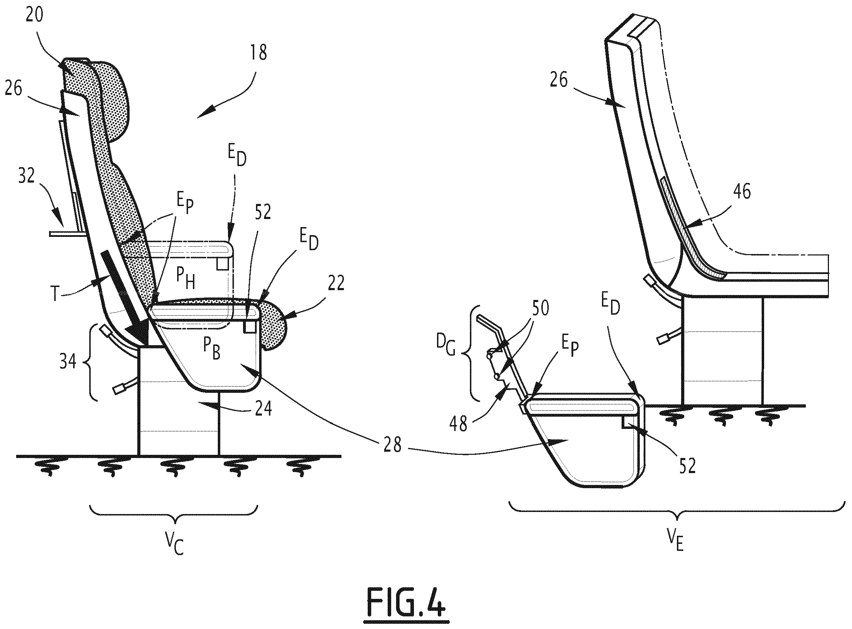

A titre d'alternative, un deuxième mode de réalisation de la présente invention est illustré par la figure 4, où, par simplicité, les éléments identiques au premier mode de réalisation, illustré par les figures 2 et 3, sont référencés par des références numériques identiques. Il est à noter que les caractéristiques de taille d'accoudoir latéral 28 indiquées en relation avec le premier mode de réalisation sont également applicables à ce deuxième mode de réalisation.

De plus, selon ce deuxième mode de réalisation illustré par la figure 4, de même que pour le premier mode de réalisation, l'accoudoir latéral 28 est relié par liaison mécanique à la coque 26 du siège 18, la liaison mécanique à la coque 26 du siège 18 étant configurée pour rendre l'accoudoir latéral 28 mobile, entre une première position basse P_{B} d'effacement et d'accès latéral à l'assise dudit siège 18 et une deuxième position haute P_{H} d'appui-bras.

La hauteur (par rapport au sol 14) de l'extrémité distale E_{D}, par rapport au dossier 20, de la face appui-bras de l'accoudoir latéral 28 est, en première position basse P_{B} de l'accoudoir latéral 28, inférieure à la hauteur (par rapport au sol 14) de l'extrémité distale E_{D}, par rapport au dossier 20, de la face appui-bras de l'accoudoir latéral 28 en deuxième position haute P_{H} d'appui-bras.

De préférence, en position basse P_{B} d'effacement et d'accès latéral, l'accoudoir latéral (28) prolonge latéralement le plan d'assise P_{A} passager ou est complètement localisé sous ce plan d'assise P_{A} passager.

Le deuxième mode de réalisation illustré par la figure 4, diffère du premier mode de réalisation illustré par la figure 1, en ce que la liaison mécanique est une liaison glissière dans le flanc de la coque 26 du siège 18 permettant un déplacement par translation T de l'accoudoir latéral 28 entre la position basse P_{B} d'effacement et d'accès latéral à l'assise dudit siège 18 et la position haute P_{H} d'appui-bras, tel qu'illustré par la vue de côté V_{C} de la figure 4.

Autrement dit, selon ce deuxième mode de réalisation, l'accoudoir latéral 28, pour atteindre la position basse P_{B} d'effacement et d'accès latéral à l'assise dudit siège 18, est escamotable (i.e. s'efface) par translation vers le sol 14 (i.e. vers le bas du siège 18) à partir de la position haute P_{H} d'appui-bras, et n'est alors plus un obstacle pour le passager voulant s'installer ou sortir de son siège 18.

Plus précisément, telle qu'illustré par la vue éclatée V_{E} de la figure 4, une telle liaison glissière est obtenue par cheminement, dans une glissière 46 créée dans la partie latérale de la coque 26, d'un dispositif de guidage D_{G} de l'accoudoir latéral 28, par exemple réalisé par une plaque 48 équipée de galets 50, cette plaque 48 étant propre à cheminer dans la glissière 46 créée dans la partie latérale de la coque 26, autorisant ainsi la translation de l'accoudoir latéral 28. En d'autres termes, le « nez » correspondant à l'extrémité proximale E_{P}, par rapport au dossier 20, de la face appui-bras de l'accoudoir latéral 28 se relève, pour passer de la position basse P_{B} d'effacement et d'accès latéral à l'assise dudit siège 18 à la position haute P_{H} d'appui-bras, en suivant l'inclinaison de la coque 26.

Avantageusement, ce deuxième mode de réalisation permet d'éviter tout engagement de l'accoudoir latéral 28 dans l'espace d'assise du passager installé sur le siège à l'arrière du siège 18 considéré, notamment en position basse P_{B} d'effacement et d'accès latéral à l'assise dudit siège 18, ce qui évite ainsi de heurter les jambes de ce passager lors de la manipulation de l'accoudoir latéral 28 pour le placer en position d'effacement P_{B}.

De plus, ce deuxième mode de réalisation par liaison glissière de l'accoudoir latéral 28 à la coque 26 du siège 18, illustré par la figure 4, permet en outre d'optimiser/conserver la capacité de bagages sous le siège 18 car le pied 24 du siège 18 peut être en alignement avec l'accoudoir latéral 28. Autrement dit, selon ce deuxième mode de réalisation, il n'y a pas d'interférence entre le pied 24 et l'accoudoir latéral 28 lors de la translation T de ce dernier par liaison glissière.

Selon un aspect particulier optionnel et complémentaire de ce deuxième mode de réalisation, la liaison glissière est configurée pour fournir au moins une position intermédiaire stable entre les deux positions extrêmes de l'accoudoir latéral 28 correspondant d'une part à la position basse P_{B} d'effacement et d'accès latéral à l'assise dudit siège 18 et d'autre part à la position haute P_{H} d'appui-bras. Selon chacune des positions de l'accoudoir latéral 28 fournies par la liaison glissière, la face appui-bras, présentant par rapport au dossier 20 une extrémité proximale E_{P} et une extrémité distale E_{D}, est positionnée parallèlement à l'assise 22 en fonction de l'inclinaison du siège 18.

De plus, en complément de cet aspect optionnel facultatif, l'accoudoir latéral 28 comprend une palette mécanique 52 placée sur la face externe de l'accoudoir latéral 28 pour libérer le mouvement de l'accoudoir latéral 28 afin d'en changer la position selon une des positions stables fournies au moyen de la liaison glissière. Autrement dit, selon cet aspect optionnel facultatif, il est alors possible d'obtenir plusieurs positions stables lors de la translation T de l'accoudoir latéral 28, ce qui permet de ce fait d'avoir un réglage au niveau de la hauteur, par rapport au sol 14, de la face appui-bras de l'accoudoir latéral 28. Ce réglage en hauteur de la surface repose-bras permet de s'adapter à la morphologie de différents passagers, et permet également de régler la hauteur de l'accoudoir en fonction de l'inclinaison du siège 18.

De plus, selon ce deuxième mode de réalisation, si le pied 24 du siège 18 comporte un éclairage/balisage du couloir du véhicule de transport, alors la cinématique par translation T de l'accoudoir latéral 28 permet de garantir cette fonction d'éclairage/balisage même quand l'accoudoir latéral 28 est en position basse P_{B} d'effacement et d'accès latéral à l'assise dudit siège 18.

La présente invention permet ainsi de privatiser davantage l'espace du passager assis sur le siège 18 et ainsi de faire contribuer le siège 18 à un effet « bulle », « confort » ou encore « cocooning » dont bénéficie le passager et ce en garantissant en position basse d'effacement un accès aisé conforme au requis de la STI PMR tout en évitant de heurter, lors de la manipulation de l'accoudoir latéral 28, un passager installé sur le siège localisé à l'arrière du siège considéré. Le confort global du véhicule de transport équipé d'un siège selon la présente invention est en conséquence amélioré.

## Revendications

1. Siège (18) d'un véhicule de transport comprenant un dossier (20), une assise (22), un pied (24) de siège fixé au sol (14) du véhicule, une coque (26) recouvrant, au moins partiellement, l'arrière et les parties latérales du dossier (20) du siège (18) et recouvrant, au moins partiellement, la surface inférieure et les parties latérales de l'assise (22), et au moins un accoudoir latéral (28),
**caractérisé en ce que** l'accoudoir latéral (28) est relié par liaison mécanique à la coque (26) du siège (18), la liaison mécanique à la coque (26) du siège (18) étant configurée pour rendre l'accoudoir latéral (28) mobile, entre une première position basse (P_{B}) d'effacement et d'accès latéral à l'assise dudit siège (18) et une deuxième position haute (P_{H}) d'appui-bras,
la face appui-bras de l'accoudoir latéral (28) présentant une extrémité distale (E_{D}),
la hauteur de l'extrémité distale (E_{D}), par rapport au dossier (20), de la face appui-bras de l'accoudoir latéral (28) étant, en première position basse (P_{B}) de l'accoudoir latéral (28), inférieure à la hauteur de l'extrémité distale (E_{D}), par rapport au dossier (20), de la face appui-bras de l'accoudoir latéral (28) en deuxième position haute (P_{H}) d'appui-bras,
en position basse (P_{B}) d'effacement et d'accès latéral, l'accoudoir latéral (28) prolonge latéralement le plan d'assise (P_{A}) passager ou est complètement localisé sous ce plan d'assise (P_{A}) passager,
en position haute (P_{H}) d'appui-bras, l'accoudoir latéral (28), d'une seule pièce, présente une hauteur (42), selon une direction sensiblement perpendiculaire au sol (14) du véhicule, comprise entre 250 et 350 mm, et
en position haute (P_{H}) d'appui-bras, l'accoudoir latéral (28), d'une seule pièce, présente une longueur (40), selon une direction sensiblement parallèle à l'axe longitudinal de déplacement du véhicule, comprise entre 300 et 400 mm.

2. Siège (18) selon la revendication 1, dans lequel l'accoudoir latéral (28) est relié par liaison pivot, ou par liaison glissière, à la coque (26) du siège (18), l'accoudoir latéral (28) étant mobile, entre une première position basse (P_{B}) d'effacement et d'accès latéral à l'assise dudit siège (18) et une deuxième position haute (P_{H}) d'appui-bras, respectivement, selon un sens (R) de rotation partant de l'assise (22) vers le dossier (20) en passant par l'avant du siège (18), ou selon une translation (T) guidée par ladite liaison glissière.

3. Siège (18) selon l'une quelconque des revendications précédentes, dans lequel en position basse (P_{B}) d'effacement et d'accès latéral, l'accoudoir latéral (28) est sensiblement localisé à l'avant de la ligne d'aplomb (36) de l'extrémité proximale de l'assise par rapport au dossier (20), tout en étant sensiblement localisé à l'arrière de la ligne d'aplomb (38) de l'extrémité distale de l'assise par rapport au dossier (20) du siège (18).

4. Siège (18) selon l'une quelconque des revendications précédentes, dans lequel la valeur de l'angle de rotation (R) pour passer de la première position basse (P_{B}) d'effacement et d'accès latéral à l'assise dudit siège (18) à la deuxième position haute (P_{H}) d'appui-bras est au moins égale à 75°, de préférence sensiblement égale à 90°.

5. Siège (18) selon l'une quelconque des revendications précédentes, dans lequel la coque (26) comprend un engrenage de blocage de l'accoudoir latéral (28) en deuxième position haute (P_{H}) d'appui-bras, dont le déblocage, est activé en présence d'une première rotation (R₁) selon un angle prédéterminé de l'accoudoir latéral (28) selon un premier sens de l'assise vers le dossier (20), suivie d'une deuxième rotation (R₂) de l'accoudoir latéral (28) selon un deuxième sens inverse du dossier (20) vers l'assise (22) pour repasser à la première position basse (P_{B}) d'effacement et d'accès latéral à l'assise en passant par l'avant du siège (18), la valeur de l'angle prédéterminé de la première rotation (R₁) de déblocage d'engrenage étant de préférence comprise entre 15° et 25°.

6. Siège (18) selon l'une quelconque des revendications précédentes, dans lequel le pied (24) de siège (18) présente une forme configurée pour accueillir sans entrave l'accoudoir latéral (28) en première position basse (P_{B}) d'effacement et d'accès latéral à l'assise.

7. Véhicule de transport, comportant au moins un siège (18) selon l'une quelconque des revendications précédentes.

## Patentansprüche

1. Sitz (18) für ein Transportfahrzeug, umfassend eine Rückenlehne (20), eine Sitzfläche (22), einen am Fahrzeugboden (14) befestigten Sitzfuß (24), eine Schale (26), die wenigstens teilweise die Rückseite und die Seitenteile der Rückenlehne (20) des Sitzes (18) und wenigstens teilweise die Unterseite und die Seitenbereiche der Sitzfläche (22) überdeckt, und wenigstens eine seitliche Armlehne (28),
**dadurch gekennzeichnet, dass** die seitliche Armlehne (28) mechanisch mit der Schale (26) des Sitzes (18) verbunden ist, wobei die mechanische Verbindung mit der Schale (26) des Sitzes (18) so ausgebildet ist, dass die seitliche Armlehne (28) zwischen einer ersten unteren Position (P_{B}) zum Wegklappen und seitlichen Zugang zur Sitzfläche des Sitzes (18) und einer zweiten oberen Position (P_{H}) als Armlehne beweglich ist,
wobei die Armlehnenfläche der seitlichen Armlehne (28) ein distales Ende (E_{D}) aufweist,
wobei die Höhe des distalen Endes (E_{D}), in Bezug auf die Rückenlehne (20), der Armlehnenfläche der seitlichen Armlehne (28) in der ersten unteren Position (P_{B}) der seitlichen Armlehne (28) geringer ist als die Höhe des distalen Endes (E_{D}), in Bezug auf die Rückenlehne (20), der Armlehnenauflagefläche der seitlichen Armlehne (28) in der zweiten oberen Position (P_{H}) der Armlehne,
wobei in der unteren Position (P_{B}) zum Wegklappen und seitlichen Zugang, die seitliche Armlehne (28) seitlich die Sitzfläche (P_{A}) des Insassen verlängert oder sich vollständig unter dieser Sitzfläche (P_{A}) des Insassen befindet,
wobei in der oberen Position (P_{H}) der Armstütze, die einteilige seitliche Armlehne (28) in einer Richtung, die im Wesentlichen senkrecht zum Fahrzeugboden (14) verläuft, eine Höhe (42) zwischen 250 und 350 mm aufweist,
und wobei in der oberen Position (P_{H}) der Armstütze die einteilige seitliche Armlehne (28) in einer Richtung, die im Wesentlichen parallel zur Längsbewegungsachse des Fahrzeugs verläuft eine Länge (40) zwischen 300 und 400 mm aufweist.

2. Sitz (18) nach Anspruch 1, wobei die seitliche Armlehne (28) durch eine Schwenkverbindung oder eine Gleitverbindung mit der Schale (26) des Sitzes (18) verbunden ist, wobei die seitliche Armlehne (28) zwischen einer ersten unteren Position (P_{B}) zum Wegklappen und seitlichen Zugang zur Sitzfläche des Sitzes (18) und einer zweiten oberen Position (P_{H}) als Armstütze beweglich ist, jeweils in einer Drehrichtung (R) von der Sitzfläche (22) zur Rückenlehne (20) über die Vorderseite des Sitzes (18) oder in einer durch die Gleitverbindung geführten Verschiebungsrichtung (T).

3. Sitz (18) nach einem der vorhergehenden Ansprüche, wobei in der unteren Position (P_{B}) zum Wegklappen und seitlichen Zugang die seitliche Armlehne (28) im Wesentlichen vor der Senkrechten (36) des proximalen Endes der Sitzfläche in Bezug auf die Rückenlehne (20) im Wesentlichen vor der Senkrechten (38) des distalen Endes der Sitzfläche in Bezug auf die Rückenlehne (20) des Sitzes (18) angeordnet ist.

4. Sitz (18) nach einem der vorhergehenden Ansprüche, wobei der Wert des Drehwinkels (R) für den Übergang von der ersten unteren Position (P_{B}) zum Wegklappen und seitlichen Zugang zur Sitzfläche des Sitzes (18) in die zweite obere Position (P_{H}) der Armlehne wenigstens 75° beträgt, bevorzugt im Wesentlichen 90° beträgt.

5. Sitz (18) nach einem der vorhergehenden Ansprüche, wobei die Schale (26) ein Getriebe zum Arretieren der seitlichen Armlehne (28) in der zweiten oberen Position (P_{H}) der Armstütze umfasst, deren Entriegelung bei einer ersten Drehung (R₁) um einen vorbestimmten Winkel der seitlichen Armlehne (28) in einer ersten Richtung vom Sitz zur Rückenlehne (20) erfolgt, gefolgt von einer zweiten Drehung (R₂) der seitlichen Armlehne (28) in einer zweiten entgegengesetzten Richtung von der Rückenlehne (20) zum Sitz (22), um in die erste untere Position (P_{B}) zum Wegklappen und seitlichen Zugang zum Sitz über die Vorderseite des Sitzes (18) zurückzukehren, wobei der Wert des vorbestimmten Winkels der ersten Drehung (R₁) zum Lösen der Verriegelung bevorzugt zwischen 15° und 25° liegt.

6. Sitz (18) nach einem der vorhergehenden Ansprüche, wobei der Fuß (24) des Sitzes (18) eine Form aufweist, die dazu ausgebildet ist, die seitliche Armlehne (28) in der ersten unteren Position (P_{B}) zum Wegklappen und seitlichen Zugang zur Sitzfläche ungehindert aufzunehmen.

7. Transportfahrzeug, umfassend wenigstens einen Sitz (18) nach einem der vorhergehenden Ansprüche.

## Claims

1. Seat (18) of a transport vehicle comprising a backrest (20), a squab (22), a seat base (24) attached to the vehicle floor (14), a shell (26) covering, at least partially, the back and the lateral parts of the backrest (20) of the seat (18) and covering, at least partially, the lower surface and the lateral parts of the squab (22), and at least one lateral armrest (28),
**characterised in that** the lateral armrest (28) is mechanically connected to the shell (26) of the seat (18), the mechanical connection to the shell (26) of the seat (18) being configured to make the lateral armrest (28) movable, between a first low position (P_{B} ) of retraction and lateral access to the squab of said seat (18) and a second high arm-support position (P_{H} ),
the arm-support face of the lateral armrest (28) having a distal end (E_{D} ),
the height of the distal end (E_{D} ), with respect to the backrest (20), of the arm-support face of the lateral armrest (28) being, in the first low position (P_{B} ) of the lateral armrest (28), lower than the height of the distal end (E_{D} ), with respect to the backrest (20), of the arm-support face of the lateral armrest (28) in the second high arm-support position (P_{H} ),
in the low position (P_{B}) of retraction and lateral access, the lateral armrest (28) extends the passenger squab surface (P_{A} ) laterally or is located completely below this passenger seat surface (P_{A} ),
in the high arm-support position (P_{H} ), the lateral armrest (28), in one piece, has a height (42), in a direction substantially perpendicular to the floor (14) of the vehicle, of between 250 and 350 mm, and
in the high arm-support position (P_{H} ), the lateral armrest (28), in one piece, has a length (40), in a direction substantially parallel to the longitudinal axis of movement of the vehicle, of between 300 and 400 mm.

2. Seat (18) according to claim 1, wherein the lateral armrest (28) is connected by pivot connection, or by slide connection, to the shell (26) of the seat (18), the lateral armrest (28) being movable, between a first low position (P_{B} ) of retraction and lateral access to the squab of said seat (18) and a second high arm-support position (P_{H} ), respectively, in a rotation direction (R) starting from the squab (22) towards the backrest (20) passing through the front of the seat (18), or in a translation (T) guided by said slide connection.

3. Seat (18) according to either one of the preceding claims, wherein, in the low position (P_{B} ) of retraction and lateral access, the lateral armrest (28) is substantially located in front of the plumb line (36) of the proximal end of the squab with respect to the backrest (20), while being substantially located at the rear of the plumb line (38) of the distal end of the squab with respect to the backrest (20) of the seat (18).

4. Seat (18) according to any one of the preceding claims, wherein the value of the angle of rotation (R) to move from the first low position (P_{B} ) of retraction and lateral access to the squab of said seat (18) to the second high arm-support position (P_{H}) is at least equal to 75°, preferably substantially equal to 90°.

5. Seat (18) according to any one of the preceding claims, wherein the shell (26) comprises gears for locking the lateral armrest (28) in the second high arm-support position (P_{H} ), the release of which is activated in the presence of a first rotation (R₁ ) at a predetermined angle of the lateral armrest (28) in a first direction of the squab toward the backrest (20), followed by a second rotation (R₂ ) of the lateral armrest (28) in a second reverse direction of the backrest (20) towards the squab (22) to return to the first low position (P_{B} ) of retraction and lateral access to the squab passing through the front of the squab (18), the value of the predetermined angle of the first gear release rotation (R₁ ) preferably being between 15° and 25°.

6. Seat (18) according to any one of the preceding claims, wherein the base (24) of the seat (18) has a shape configured to accommodate the lateral armrest (28) without hindrance in the first low position (P_{B} ) of retraction and lateral access to the seat.

7. Transport vehicle, including at least one seat (18) according to any one of the preceding claims.
